# EUROPEAN PATENT SPECIFICATION

(11) **EP 4 565 651 B1**
(45) Date of publication and mention of the grant of the patent: **14.10.2026**
(21) Application number: 23748995.0
(22) Date of filing: 26.07.2023
(51) Int. Cl.: C08L 23/12

(54) **POLYOLEFIN COMPOSITIONS OBTAINED FROM RECYCLED POLYOLEFINS**
AUS RECYCELTEN POLYOLEFINEN ERHALTENE POLYOLEFINZUSAMMENSETZUNGEN
COMPOSITIONS DE POLYOLÉFINES OBTENUES À PARTIR DE POLYOLÉFINES RECYCLÉES

(30) Priority: 04.08.2022 EP 22188784
(43) Date of publication of application: 11.06.2025
(73) Proprietor: Basell Poliolefine Italia S.r.l., 20121 Milano (IT)
(72) Inventor: CAVALIERI, Claudio, 44122 Ferrara (IT); COVA, Cristina, 44122 Ferrara (IT); RIEMMA, Antonio, 44122 Ferrara (IT); DE CAPUA, Alberta, 44122 Ferrara (IT); BOCCHINO, Marco, 44122 Ferrara (IT); TARTARI, Davide, 44122 Ferrara (IT)
(74) Representative: LyondellBasell
(86) International application number: PCT/EP2023/070763
(87) International publication number: WO 2024/028191

(56) References cited:
- WO-A1-2019/240899
- WO-A1-2022/002602

## Description

### FIELD OF THE INVENTION

The present disclosure relates to soft polypropylene compositions containing recycled elastomeric material that can be used in preparation of extruded articles.

### BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity. Moreover, they can be advantageously transformed into finished products with the same techniques used for thermoplastic polymers. In particular, flexible polymer materials are widely used in the medical field, as well as for packaging, extrusion coating and electrical wires and cables covering.

Elastic polypropylene compositions retaining good thermoplastic behavior have been obtained in the art by way of sequential copolymerization of propylene, optionally containing minor quantities of olefin comonomers, and then ethylene/propylene or ethylene/alpha-olefin copolymers mixtures. Catalysts based on halogenated titanium compounds supported on magnesium chloride are commonly used for this purpose. For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties.

WO 2022/002602 A1 describes polypropylene compositions comprising recycled polyethylene that can be used in injection molded articles particularly for automotive battery cases.

WO 2019/240899 A1 teaches polypropylene- and polyethylene-based polyolefin compositions having improved impact properties wherein in addition to PP and PE propylene-based elastomer and ethylene-based plastomer are comprised.

In addition, polyolefin compositions, although being appreciated in terms of performances, give raise to concerns in terms of sustainability with particular reference to the fact that their production is based on the use of non-renewable sources.

As a result, a common attempt to mitigate the problem is that of replacing, at least in part, virgin polyolefin compositions with variable amounts of recycled plastic materials.

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that it is possible to have an improved property profile especially in terms of impact and modulus values when a blend of recycled polymers is added to a virgin polypropylene.

### SUMMARY OF THE INVENTION

It is therefore an object of the present disclosure a propylene polymer composition having a value of melt flow rate (ISO 1133-1 230°C/2.16 kg) ranging from 3.0 g/10min to 70.0 g/10min comprising:
A) 50 wt% to 80 wt%, of a propylene homopolymer or a propylene ethylene copolymer containing up to 22.0 wt% of ethylene, said propylene homopolymer or a propylene ethylene copolymer having a melt flow rate (ISO 1133-1 230°C/2.16 kg) ranging from 20.0 to 100.0 g/10min;
B) 50 wt% to 20 wt% of a blend comprising:
   T1) from 10 wt% to 50 wt% of a propylene ethylene copolymer containing from 8.0 wt% to 20.0 wt%; of ethylene derived units; said copolymer having a MFR (ISO 1133-1 190°C 2.16 kg of load) comprised between 0.5 g/10 min and 5.0 g/10 min;
   T2) from 50 wt% to 90 wt% of recycled polyethylene (r-PE) having a melt flow rate (190°C/2.16 Kg) from 0.1 to 10.0 g/10min and containing an amount of polypropylene inclusions ranging from 1 wt% to 15wt% of the total r-PE component, the sum of the amount of T1 and T2 being 100;
the sum of the amount of A) and B) being 100.

### DETAILED DESCRIPTION OF THE INVENTION

An object of the present disclosure a propylene polymer composition having a value of melt flow rate (ISO 1133 230°C/2.16 kg) ranging from 3.0 g/10min to 70.0 g/10min; preferably from 8.0 g/10min to 45.0 g/10min; more preferably from 10.0 g/10min to 35.0 g/10 min comprising or consisting essentially of:
A) 50 wt% to 80 wt%, preferably 55 wt% to 75 wt%; more preferably 58 wt% to 72 wt%; even more preferably from 55 to 65 wt% of a propylene homopolymer or a propylene ethylene copolymer containing up to 22.0 wt%; preferably up to 12.0 wt%; more preferably up to 7.0 wt% of ethylene, said propylene homopolymer or a propylene ethylene copolymer having a melt flow rate (ISO 1133 230°C/2.16 kg) ranging from 20.0 to 100.0g/10min preferably from 60.0 to 90.0g/10min; more preferably from 65.0 to 85.0g/10min;
B) 20 wt% to 50 wt% preferably from 25 wt% to 45 wt%; more preferably from 28 wt% to 42; even more preferably from 35 wt% to 45 wt% of a blend comprising:
   T1) from 10 wt% to 50 wt%; preferably from 15 wt% to 40 wt%, more preferably from 20 wt% to 30 wt% of a propylene ethylene copolymer containing from 8.0 wt% to 20.0 wt% preferably from 11 wt% to 19 wt% more preferably from 13 wt% to 18 wt%; of ethylene derived units; said copolymer having a MFR (measured at 190°C 2.16 kg of load) comprised between 0.5 g/10 min and 5.0 g/10 min; preferably from 0.8 g/10 min and 3.0 g/10 min;
   T2) from 50 wt% to 90 wt%; preferably from 60 wt% to 85 wt%, more preferably from 70 wt% to 80 wt% of recycled polyethylene (r-PE) having a melt flow rate (190°C/2.16 Kg) from 0.1 to 10.0 g/10min and containing an amount of polypropylene inclusions ranging from 1 wt% to 15 wt% of the total r-PE component;
   the sum of the amounts of T1 and T2 being 100;
   the sum of the amounts of A) and B) being 100.

The term "copolymer" as used herein refers to both polymers with two different recurring units and polymers with more than two different recurring units, such as terpolymers, in the chain. By "ambient or room temperature" is meant therein a temperature of 25 °C.

By the term "crystalline propylene polymer" is meant in the present application a propylene polymer having an amount of isotactic pentads (mmmm), measured by ¹³C-MNR on the fraction insoluble in xylene at 25° C, higher than 70 molar %; by "elastomeric" polymer is meant a polymer having solubility in xylene at ambient temperature higher than 50 wt%.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A) to (B) and any preferred range of features of components (A) to (B) can be combined with any preferred range of one or more of the features of components (A) to (B) and with any possible additional component, and its features, described in the present disclosure.

Preferably component A) is a virgin resin; preferably component A is propylene homopolymer.

The melting temperature of the component A) preferably ranges from 135°C to 165°C. When the component A) is a homopolymer the melting temperature, determined via DSC, preferably ranges from 155°C to 165°C while for a copolymer it preferably ranges from 135°C to 155°C.

Component A) can be prepared by polymerizing propylene, optionally in mixture with ethylene in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound having the general formula:
   (R⁷)ₐ(R⁸)_{b}Si(OR⁹)_{c}, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)q-yXy, where q is the valence of titanium and y is a number between 1 and q, preferably TiCl₄, with a magnesium chloride deriving from an adduct of formula MgCl2•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl4 can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R⁷ and R⁸ is selected from branched alkyl, cycloalkyl or aryl groups with 3-10 carbon atoms optionally containing heteroatoms and R9 is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

The polymerization process can be carried out in gas-phase, operating in one or more fluidized or mechanically agitated bed reactors, slurry polymerization using as diluent an inert hydrocarbon solvent, or bulk polymerization using the liquid monomer (for example propylene) as a reaction medium. If needed, component A can be subject to a chemical treatment with organic peroxides in order to lower the average molecular weight and increase the melt flow index up to the value needed for the specific application.

The component (T1) is endowed with one or more of the following features:
i) tensile strength at break (ASTM D638) higher than 4 MPa;
ii) Elongation at break (ASTM D638) higher than 1500 %; preferably higher than 2000%;
iii) Flexural modulus (ASTM D 790) ranging from 5 to 30 MPa; preferably from 6 to 17 MPa; even more preferably from 8 to 19 MPa.
iv) Shore A hardness (ASTM 2240) ranging from 40 to 90; preferably from 50 to 80; even more preferably from 57 to 75.

Component T1 can be a propylene ethylene copolymer sold by ExxonMobill under the tradename Vistamaxx such as Vistamax 6102.

The component (T2) is recycled polyethylene PE it preferably is crystalline or semicrystalline high density PE (r-HDPE) selected from commercial PCW (Post Consumer Waste for example from municipality). Preferably r-PE has a density ranging (ISO 1183-1) from 0.940 g/cm³ to 0.965 g/cm³ and a melt flow rate (ISO 1133-1 190°C/2.16 Kg ISO 1133-1) from 0.1 to 1.0 g/10 min.

Prior its use, the plastic mixture containing rHDPE undergoes standard recycling process including collection, shredding, sorting and washing. Although the sorted rHDPE is constituted by a large preponderance of HDPE it invariably contains minor amounts of other polymeric and/or inorganic components. In particular, the r-PE according to the present disclosure, contains inclusion of polypropylene in an amount from 1 wt% to 15 wt% preferably from 5wt% up to 10 wt% of the total r-PE component.

In a preferred embodiment, the r-PE includes a crystalline polyethylene fraction in which in which the amount of recurring units derived from propylene in the polyethylene chains is lower than 10 wt% and most preferably they are absent, i.e, most preferably r-PE is ethylene homopolymer containing the above mentioned inclusions. Preferably, the (r-PE) has a melt flow rate (ISO 1133-1 190°C/2.16 Kg ISO 1133-1) from 0.1 to 1.0 g/10min and more preferably from 0.1 to 0.5 g/10 min.

The r-PE is commercially available. An example of a suitable r-PE grade is represented by the grade sold by Lyondellbasell under the tradename *Hostalen* QCP5603 in the ivory or grey versions.

The whole polypropylene composition of the present disclosure preferably shows a tensile modulus value lower than that of component A). Preferably embodiment, the tensile modulus of the whole propylene polymer composition ranges from to 750 MPa to 1700 MKpa more preferably from 800 to 1500 MPa.

The value of Charpy impact at 23°C ranges from 20.0 Kj/m² to 3.0 Kj/m² ; the value of Charpy impact at 0°C ranges from 3.0 Kj/m² to 14.0 Kj/m² ; the value of Charpy impact at - 20°C ranges from 2.5.0 Kj/m² to 10.0 Kj/m².

The whole propylene composition of the present disclosure can be obtained by mechanical blending of the components (A) and (B) according to conventional techniques.

The final composition comprising the components (A) and (B) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 to 2% by weight, more preferably from 0.1 to 1% by weight, with respect to the total weight, for example.

The propylene polymer composition of the present disclosure can be extruded to form films or sheets for a variety of applications. Particularly preferred is the use of the polypropylene composition for the preparation of sheets for roofing applications.

The following examples are given in order to illustrate, but not limit the present disclosure.

### EXAMPLES

### CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%).

### Melt Flow Rate (MFR)

Measured according to ISO 1133 at 190°C or 230 °C with a load of 2.16 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].

**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation: P.I.= 105/Gc in which Gc is the crossover modulus which is defined as the value (expressed in Pa) at which G'=G" wherein G' is the storage modulus and G" is the loss modulus.

### Ethylene (C2) content

### ¹³C NMR of propylene/ethylene copolymers

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations: $PPP = 100 {T}_{ββ} / S PPE = 100 {T}_{βδ} / S EPE = 100 {T}_{δδ} / S$ $PEP = 100 {S}_{ββ} / S PEE = 100 {S}_{βδ} / S EEE = 100 \left(0.25 {S}_{γδ}+0.5 {S}_{δδ}\right) / S$ $S = {T}_{ββ} + {T}_{βδ} + {T}_{δδ} + {S}_{ββ} + {S}_{βδ} + 0.25 {S}_{γδ} + 0.5 {S}_{δδ}$

The molar percentage of ethylene content was evaluated using the following equation:
E% mol = 100 * [PEP+PEE+EEE]The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

### Density

Measured according to ISO 1183-1.

### Samples for the mechanical tests

Samples have been obtained according to ISO 1873-2:2007.

**Charpy impact test** is determined according to ISO 179-1eA, and ISO 1873-2
**Elongation at yield:** measured according to ISO 527.

**Elongation at break:** measured according To ISO 527
**Stress at break:** measured according to ISO 527.

**Tensile Modulus** according to ISO 527-2,
**Tear Resistance** according to the method ASTM D 1004 on 1mm-thick extruded sheets. Crosshead speed: 51 mm/min; V-shaped die cut specimen.

**Shore D** on injection molded, compression molded plaques and extruded sheets according to the method ISO 868 (15 sec);
**Shore A** on injection molded sample measured according to ASTM D2240;
**Density** measured according to ASTM D792

### Melting point and crystallization point

The melting point has been measured by using a DSC instrument according to ISO 11357-3, at scanning rate of 20C/min both in cooling and heating, on a sample of weight between 5 and 7 mg., under inert N₂ flow. Instrument calibration made with Indium.

### Determination of PP inclusions in r-PE

¹³C NMR spectra were acquired on a Bruker AV-600 spectrometer equipped with cryoprobe, operating at 160.91 MHz in the Fourier transform mode at 120°C.

The peak of the CH₂ ethylene was used as internal reference at 29.9 ppm. The samples were dissolved in 1,1,2,2-tetrachloroethane-*d2* at 120°C with a 8 % wt/v concentration. Each spectrum was acquired with a 90° pulse, 15 seconds of delay between pulses and CPD to remove ¹H-¹³C coupling. 512 transients were stored in 32K data points using a spectral window of 9000 Hz.

Molar composition was obtained according to the following using peak areas (table 1): $P = 100 {A}_{3} / S$ $E = 100 0.5 {A}_{2} / S$ Where $S = 0.5 {A}_{2} + {A}_{3}$

Molar content was transformed in weight using monomers molecular weight.

**Table 1: Assignment of PP/PE mixtures**

| Number | Chemical Shift (ppm) | Carbon | Sequence |
|---|---|---|---|
| 1 | 48.8 - 45.4 | CH₂ | P |
| 2 | 29.9 | CH₂ | E |
| 3 | 29.0-28.0 | CH | P |
| 4 | 21.8-19.8 | CH3 | P |

### EXAMPLES

### Component A)

Component A) is a commercial homo polymer sold as HA840R by Lyondellbasell. The homopolymer has been visbreaked with peroxides to achieve an MFR of 70 g/10 min.

### Component T1)

Component T1 is a commercial propylene-ethylene elastomer sold by ExxonMobill with the tradename Vistamaxx 6102. The characteristics of said copolymer are reported on table 2.

**Table 2**

| | | |
|---|---|---|
| Propylene content | wt% | 84 |
| Ethylene content | wt% | 16 |
| MFR (190°C, 2.16Kg) | g/10' | 1.4 |
| Tensile Strength at Break (ASTM D 638) | MPa | >6.9 |
| Elongation at Break (ASTM D 638) | % | >2000 |
| Shore A Hardness (ASTM D 2240) | - | 66 |
| Flexural modulus (ASTM D790) | MPa | 12.3 |

### Component T2

Component T2 is commercial grade QCP5603 ivory (a r-PE commercialized by Lyondellbasell containing 10%wt of PP inclusions) having a density of 0.95 g/cm³ and a Melt Index "E" of 0.3 g/10 min.

### Example 1

The polymer particles of component A) are introduced in an extruder (Berstorff extruder), wherein they are mixed with various amount oof components T1 and T2 as reported in table 2, 1000 ppm of M.S. 168 as an additive have been added. The polymer particles are extruded under nitrogen atmosphere in a twin screw extruder, at a rotation speed of 250 rpm and a melt temperature of 200-250° C. The characterization of the obtained composition is reported in table 3.

**Table 3**

| | Ex 1 |
|---|---|
| Component A | 60 |
| Component B | 40 |
| Component T1 (in B) | 25 |
| Component T2 (In B) | 75 |
| MFR, g/10 min | 8.5 |
| Tm °C | 162.9 |
| Tc °C | 1202.6 |
| Tensile Modulus; (N/mm²) | 1020 |
| Charpy impact 23°C Kj/ m² | 10.2 |
| Charpy impact 0°C Kj/ m² | 6.7 |
| Charpy impact -20°C Kj/ m² | 4.6 |
| D/T TT °C | ≤-50 |

The above data show that the polymer compositions according to the present disclosure have an improved balance of softness and mechanical properties.

## Claims

1. A propylene polymer composition having a value of melt flow rate (ISO 1133 230°C/2.16 kg) ranging from 3.0 g/10min to 70.0 g/10min comprising:
A) 50 wt% to 80 wt%, of a propylene homopolymer or a propylene ethylene copolymer containing up to 22 %wt of ethylene, said propylene homopolymer or a propylene ethylene copolymer having a melt flow rate (ISO 1133-1 230°C/2.16 kg) ranging from 20.0 to 100.0g/10min;
B) 50 wt% to 20 wt% of a blend comprising:
T1) from 10 wt% to 50 wt% of a propylene ethylene copolymer containing from 8.0 wt% to 20.0 wt%; of ethylene derived units; said copolymer having a MFR (measured at 190°C 2.16 kg of load) comprised between 0.5 g/10 min and 5.0 g/10 min;
T2) from 50 wt% to 90 wt% of recycled polyethylene (r-PE) having a melt flow rate (ISO 1133-1 190°C/2.16 Kg) from 0.1 to 10.0 g/10min and containing an amount of polypropylene inclusions ranging from 1 wt% to 15wt% of the total r-PE component;
the sum of the amount of T1 and T2 being 100;
the sum of the amount of A) and B) being 100.

2. The propylene polymer composition according to claim 1 wherein the component (A) ranges from 55 wt% to 75 wt%;and component (B) ranges from 25 wt% to 45 wt%.

3. The propylene polymer composition according to claims 1 or 2 wherein T1 ranges from 15 wt% to 40wt% and T2 ranges from 60 wt% to 85 wt%;

4. The propylene polymer composition according to any of the preceding claims wherein T1 has the MFR (ISO 1133-1 190°C 2.16 kg of load) ranging from 0.8 g/10 min and 3.0 g/10 min;

5. The propylene polymer composition according to any of the preceding claims having a melt flow rate (ISO 1133 230°C/2.16 kg) ranging from 8.0 g/10min to 45.0 g/10min.

6. The propylene polymer composition according to any of the preceding claims in which component (A) has a melt flow rate ranging from 60.0 to 90.0g/10min.

7. The propylene polymer composition according to any of the preceding claims wherein component (A) is a propylene homopolymer.

8. The propylene polymer composition according to any of the preceding claims wherein component (A) ranges from 58 wt% to 72 wt% and component B ranges from 35wt% to 45 wt% .

9. The propylene polymer composition according to any of the preceding claims wherein (T1) ranges from 20 wt% to 30 wt% and T2 ranges from 70 wt% to 80 wt%.

10. The polypropylene compositions according to any of the preceding claims wherein component (T2) has an amount of PP inclusions ranging from 5 wt% to 10 wt% based on the total amount of component (T2).

11. The polypropylene compositions according to anyone of the preceding claims wherein component (T2) has a density (ISO 1183-1) ranging from 0.940 g/cm³ to 0.965 g/cm³ and a melt flow rate (190°C/2.16 Kg ISO 1133-1) from 0.1 to 1.0 g/10 min.

12. The propylene polymer composition according to any of the preceding claims wherein component T1 contains from 11.0 wt% to 19.0 wt% of ethylene derived units.

13. The propylene polymer composition according to any of the preceding claims wherein component T1 has a Shore A hardness (ASTM 2240) ranging from 50 to 80.

14. The propylene polymer composition according to any of the preceding claims wherein component T1 contains from 13.0 wt% to 18.0 wt% of ethylene derived units..

15. An extruded article obtained from the propylene polymer composition according to any of the preceding claims.

## Patentansprüche

1. Eine Propylenpolymerzusammensetzung mit einem Schmelzindex (ISO 1133, 230 °C/2,16 kg) im Bereich von 3,0 g/10 min bis 70,0 g/10 min, umfassend:
A) 50 Gew.-% bis 80 Gew.-% eines Propylenhomopolymers oder eines Propylen-Ethylen-Copolymers, das bis zu 22 Gew.-% Ethylen enthält, wobei das Propylenhomopolymer oder das Propylen-Ethylen-Copolymer einen Schmelzindex (ISO 1133-1 230 °C/2,16 kg) im Bereich von 20,0 bis 100,0 g/10 min;
B) 50 Gew.-% bis 20 Gew.-% einer Mischung, bestehend aus:
T1) 10 Gew.-% bis 50 Gew.-% eines Propylen-Ethylen-Copolymers, das 8,0 Gew.-% bis 20,0 Gew.-% Ethylen-abgeleitete Einheiten enthält; wobei das Copolymer einen Schmelzindex (gemessen bei 190 °C und 2,16 kg Belastung) zwischen 0,5 g/10 min und 5,0 g/10 min aufweist;
T2) 50 Gew.-% bis 90 Gew.-% recyceltes Polyethylen (r-PE) mit einer Schmelzflussrate (ISO 1133-1, 190 °C/2,16 kg) von 0,1 bis 10,0 g/10 min aufweist und eine Menge an Polypropylen-Einschlüssen enthält, die zwischen 1 Gew.-% und 15 Gew.-% der gesamten r-PE-Komponente liegt; wobei die Summe der Mengen von T1 und T2 100 beträgt;
wobei die Summe der Mengen von A) und B) 100 beträgt.

2. Die Propylenpolymerzusammensetzung nach Anspruch 1, wobei die Komponente (A) liegt im Bereich von 55 Gew.-% bis 75 Gew.-%; und Komponente (B) liegt im Bereich von 25 Gew.-% bis 45 Gew.-%.

3. Die Propylenpolymerzusammensetzung gemäß Anspruch 1 oder 2, wobei T1 im Bereich von 15 Gew.-% bis 40 Gew.-% und T2 im Bereich von 60 Gew.-% bis 85 Gew.-% liegt;

4. Die Propylenpolymerzusammensetzung gemäß einem der vorstehenden Ansprüche, wobei T1 einen MFR (ISO 1133-1, 190 °C, 2,16 kg Belastung) im Bereich von 0,8 g/10 min und 3,0 g/10 min;

5. Die Propylenpolymerzusammensetzung gemäß einem der vorstehenden Ansprüche, die eine Schmelzflussrate (ISO 1133, 230 °C/2,16 kg) im Bereich von 8,0 g/10 min bis 45,0 g/10 min aufweist.

6. Die Propylenpolymerzusammensetzung gemäß einem der vorstehenden Ansprüche, wobei die Komponente (A) eine Schmelzflussrate im Bereich von 60,0 bis 90,0 g/10 min aufweist.

7. Die Propylenpolymerzusammensetzung gemäß einem der vorstehenden Ansprüche, wobei die Komponente (A) ein Propylenhomopolymer ist.

8. Die Propylenpolymerzusammensetzung gemäß einem der vorstehenden Ansprüche, wobei der Anteil von Komponente (A) im Bereich von 58 Gew.-% bis 72 Gew.-% und der Anteil von Komponente B im Bereich von 35 Gew.-% bis 45 Gew.-% liegt.

9. Die Propylenpolymerzusammensetzung gemäß einem der vorstehenden Ansprüche, wobei (T1) im Bereich von 20 Gew.-% bis 30 Gew.-% und T2 im Bereich von 70 Gew.-% bis 80 Gew.-% liegt.

10. Die Polypropylen-Zusammensetzungen gemäß einem der vorstehenden Ansprüche, wobei die Komponente (T2) einen Anteil an PP-Einschlüssen im Bereich von 5 Gew.-% bis 10 Gew.-%, bezogen auf die Gesamtmenge der Komponente (T2), aufweist.

11. Die Polypropylen-Zusammensetzungen gemäß einem der vorstehenden Ansprüche, wobei die Komponente (T2) eine Dichte (ISO 1183-1) im Bereich von 0,940 g/cm³ bis 0,965 g/cm³ und eine Schmelzflussrate (190 °C/2,16 kg, ISO 1133-1) von 0,1 bis 1,0 g/10 min aufweist.

12. Die Propylenpolymerzusammensetzung gemäß einem der vorstehenden Ansprüche, wobei die Komponente T1 11,0 Gew.-% bis 19,0 Gew.-% von Ethylen abgeleitete Einheiten enthält.

13. Die Propylenpolymerzusammensetzung gemäß einem der vorstehenden Ansprüche, wobei die Komponente T1 eine Shore-A-Härte (ASTM 2240) im Bereich von 50 bis 80 aufweist.

14. Die Propylenpolymerzusammensetzung gemäß einem der vorstehenden Ansprüche, wobei die Komponente T1 13,0 Gew.-% bis 18,0 Gew.-% von Ethylen abgeleitete Einheiten enthält.

15. Ein extrudierter Gegenstand, der aus der Propylenpolymerzusammensetzung gemäß einem der vorstehenden Ansprüche erhalten wird.

## Revendications

1. Une composition de polymère de propylène présentant un indice de fluidité à chaud (ISO 1133, 230 °C/2,16 kg) compris entre 3,0 g/10 min et 70,0 g/10 min, comprenant :
A) 50 % en poids à 80 % en poids d'un homopolymère de propylène ou d'un copolymère propylène-éthylène contenant jusqu'à 22 % en poids d'éthylène, ledit homopolymère de propylène ou copolymère propylène-éthylène ayant un indice de fluidité à chaud (ISO 1133-1 230 °C/2,16 kg) compris entre 20,0 et 100,0 g/10 min ;
B) 50 % en poids à 20 % en poids d'un mélange comprenant :
T1) de 10 % en poids à 50 % en poids d'un copolymère de propylène-éthylène contenant de 8,0 % en poids à 20,0 % en poids d'unités dérivées de l'éthylène ; ledit copolymère ayant un indice de fluidité à chaud (mesuré à 190 °C avec une charge de 2,16 kg) compris entre 0,5 g/10 min et 5,0 g/10 min ;
T2) de 50 % en poids à 90 % en poids de polyéthylène recyclé (r-PE) présentant un indice de fluidité à chaud (ISO 1133-1 190 °C/2,16 kg) compris entre 0,1 et 10,0 g/10 min et contenant une quantité d'inclusions de polypropylène comprise entre 1 % en poids et 15 % en poids du composant r-PE total ; la somme des quantités de T1 et T2 étant égale à 100 ;
la somme des quantités de A) et B) étant égale à 100.

2. Composition de polymère de propylène selon la revendication 1, dans laquelle le composant
(A) est compris entre 55 % et 75 % en poids ; et le composant (B) est compris entre 25 % et 45 % en poids.

3. Composition de polymère de propylène selon l'une des revendications 1 ou 2, dans laquelle T1 est compris entre 15 % en poids et 40 % en poids et T2 est compris entre 60 % en poids et 85 % en poids ;

4. Composition de polymère de propylène selon l'une quelconque des revendications précédentes, dans laquelle T1 présente un indice de fluidité à chaud (MFR) (ISO 1133-1, 190 °C, charge de 2,16 kg) compris entre 0,8 g/10 min et
3,0 g/10 min ;

5. La composition de polymère de propylène selon l'une quelconque des revendications précédentes, présentant un indice de fluidité à chaud (ISO 1133, 230 °C/2,16 kg) compris entre 8,0 g/10 min et 45,0 g/10 min.

6. Composition de polymère de propylène selon l'une quelconque des revendications précédentes, dans laquelle le composant (A) présente un indice de fluidité à chaud compris entre 60,0 et 90,0 g/10 min.

7. Composition de polymère de propylène selon l'une quelconque des revendications précédentes, dans laquelle le composant (A) est un homopolymère de propylène.

8. Composition de polymère de propylène selon l'une quelconque des revendications précédentes, dans laquelle le composant (A) est compris entre 58 % en poids et 72 % en poids et le composant (B) est compris entre 35 % en poids et 45 % en poids.

9. Composition de polymère de propylène selon l'une quelconque des revendications précédentes, dans laquelle (T1) est compris entre 20 % en poids et 30 % en poids et T2 est compris entre 70 % en poids et 80 % en poids.

10. Les compositions de polypropylène selon l'une quelconque des revendications précédentes, dans lesquelles le composant (T2) présente une quantité d'inclusions de PP comprise entre 5 % en poids et 10 % en poids par rapport à la quantité totale du composant (T2).

11. Les compositions de polypropylène selon l'une quelconque des revendications précédentes, dans lesquelles le composant (T2) présente une densité (ISO 1183-1) comprise entre 0,940 g/cm³ à 0,965 g/cm³ et un indice de fluidité à chaud (190 °C/2,16 kg, ISO 1133-1) compris entre 0,1 et 1,0 g/10 min.

12. Composition de polymère de propylène selon l'une quelconque des revendications précédentes, dans laquelle le composant T1 contient de 11,0 % à 19,0 % en poids de motifs dérivés de l'éthylène.

13. Composition de polymère de propylène selon l'une quelconque des revendications précédentes, dans laquelle le composant T1 présente une dureté Shore A (ASTM 2240) comprise entre 50 et 80.

14. Composition de polymère de propylène selon l'une quelconque des revendications précédentes, dans laquelle le composant T1 contient de 13,0 % en poids à 18,0 % en poids de motifs dérivés de l'éthylène.

15. Article extrudé obtenu à partir de la composition de polymère de propylène selon l'une quelconque des revendications précédentes.
